# EUROPEAN PATENT SPECIFICATION

(11) **EP 4 260 928 B1**
(45) Date of publication and mention of the grant of the patent: **21.10.2026**
(21) Application number: 23167213.0
(22) Date of filing: 07.04.2023
(51) Int. Cl.: B01D 29/23, B01D 29/68

(54) **REVAMPING OF A LIQUID FILTERING APPARATUS**
MODERNISIERUNG EINER FLÜSSIGKEITSFILTERVORRICHTUNG
MODERNISATION D'UN APPAREIL DE FILTRATION DE LIQUIDE

(30) Priority: 15.04.2022 IT 202200007682
(43) Date of publication of application: 18.10.2023
(73) Proprietor: Alfa Water S.r.l., 32036 Sedico (BL) (IT)
(72) Inventor: Cendron, Nicola, 32036 Sedico BL (IT)
(74) Representative: Perani & Partners S.p.A.

(56) References cited:
- WO-A1-96/25217
- DE-A1- 102017 001 968
- US-A- 3 498 464
- US-A- 5 006 242
- US-B1- 6 409 919

## Description

### Technical field

The present invention is developed in the field of liquid filtration, especially ballast water to be discharged into the sea by a ship.

### Background art

Automatic filtering apparatuses for the ballast water of ships are known in the art, which remove residues thereof before discharging it into the sea.

Such apparatuses have a shell with a compartment in which the liquid to be filtered is introduced, usually from below. The liquid flows from the centre of the compartment to the periphery, through a hollow filter device, substantially cylindrical, to then exit from the shell purified for discharge into the sea.

Contaminant residues present in the liquid progressively accumulate on the filtering surfaces of the filter device. A rotating suction device in the centre of the compartment has mouths which slide along the filter device, to suck in the filtered residues and discharge them elsewhere by means of a suction duct. The suction is favoured by the accumulation of residues, as they hinder the exit of the liquid and increase the pressure inside the shell. It is therefore sufficient to expose the discharge of the suction duct to atmospheric pressure to obtain an efficient suction.

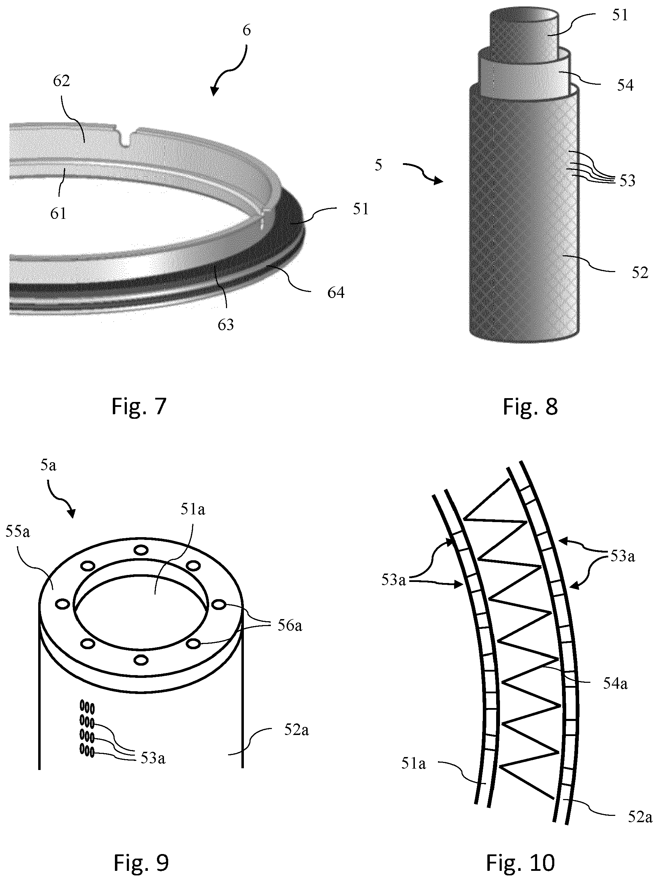

A well-known type of filtering apparatus is particularly widespread today by virtue of having obtained certifications required by the regulations of many countries. In this type, the filter device has an inner support and an outer support of substantially cylindrical and concentric metal, with numerous rows of circular holes. A pleated metallic and/or polymeric filter element is positioned between these supports, also perforated with finer openings. Some details of such a filter device are schematically illustrated in figures 9 and 10.

For efficient cleaning, the pleated grooves face the holes of the inner support. When one of the suction mouths passes near such holes of the inner support, the residues deposited in the groove are sucked in.

The pleating requires leaving sufficient space between the inner and outer supports, which are joined by metal flanges along the upper and lower edges. The upper flange is fastened to the lid of the shell by means of bolts.

An example of a known filtering apparatus for liquids is provided in document DE 102017001968 A1. This document discloses a single assembly filtering apparatus, which comprises a pleated metallic filtration element, housed into a cylindrical insert with upper and lower cover parts that are glued to the edge portions of its cylindrical inner and outer frames.

The solution disclosed in such a document, however, prevents any substitution or revamping of the apparatus components, as they are fixed together.

### Summary of the invention

The applicant has noted that:
- the pleated cartridge is difficult to clean due to the constructive form adopted, since the suction effect does not work effectively because the contaminant deposited on the pleated surface is not easily removable, being distant from the suction mouth;
- the suction mouth touches the inner surface of the cartridge without pressing thereon, decreasing the suction effect;
- the described type of the most widespread filtering apparatuses is of complex maintenance, mainly due to the high weight of the filter device and the suction device. In fact, they easily reach several tens of kilograms, and involve difficulties lifting them to extract them from the shell of the apparatus.

The object of the present invention is therefore to simplify the maintainability of liquid filtering apparatuses.

The applicant has found advantages in solving the problem posed by replacing some components of the apparatuses already on the market, given their current market diffusion, rather than their replacement with new apparatuses.

The applicant has therefore conceived a kit for revamping a liquid filtering apparatus, a method of revamping, and a liquid filtering apparatus resulting after the revamping, as claimed in any of the appended claims.

The invention includes providing a filter device in which the filter element between the two cylindrical supports is made of a filtration fabric. The two cylindrical supports can thus be made without constraints of positioning holes in front of the crests of a pleated filter element. As a result, the size and density of their openings can be increased, for example forming the inner and outer supports as lattices. In addition, there is no need for connection flanges between the inner and outer supports, which can be free to move therebetween and can be positioned very close together.

This greatly reduces the weight of the filter device. Furthermore, during maintenance the cylindrical supports and the filter element can be easily removed from each other, to wash or replace the filter element.

In order to adapt this type of filter device to a starting filtering apparatus, from which a starting filter device with metal pleating is removed, the invention also includes an annular lower support, to be laid inside the shell of the starting filtering apparatus. Such a support allows the positioning of the filter device of the invention, making a seal therewith and with the shell.

In addition, an upper support comprises fastening elements configured for the removable fastening to the lid of the filtering apparatus. It is then lowered towards the filter device together with the lid, to sealingly engage with an upper portion of the filter device.

The two supports allow the filter device of the invention to be stably positioned, despite its smaller footprint with respect to the starting filter device and the absence of connection flanges to which the lid of the apparatus can be fastened.

In preferred embodiments, the suction device can also be replaced in addition to the filter device. It is particularly advantageous to use a suction device in which suction mouths, or similar suction means, are elastically pressed against the filter device, for maximum adherence and unhindered rotary movement.

Further features and advantages of the invention will be recognisable by a person skilled in the art from the following detailed description of exemplary embodiments of the invention.

### Brief Description of the Figures

For a better understanding of the following detailed description, some embodiments of the invention are illustrated in the accompanying drawings, in which:

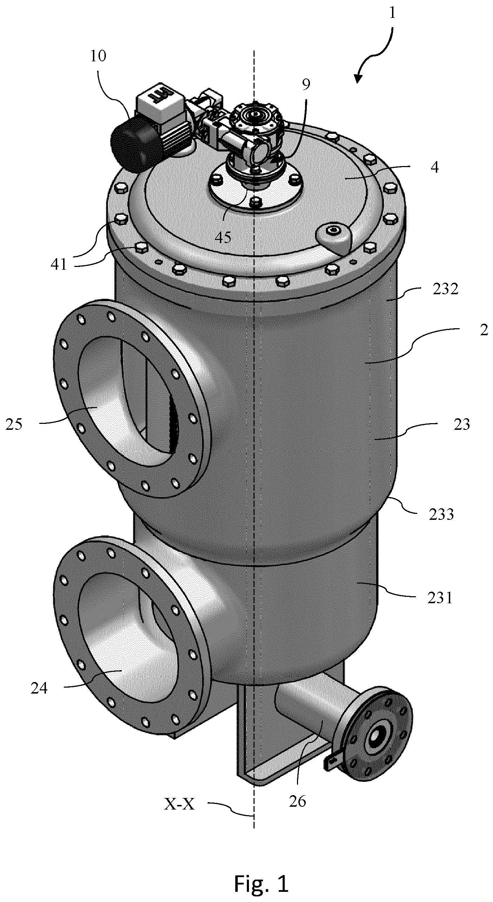

- figure 1 shows a perspective view of a liquid filtering apparatus, obtained by modifying a starting apparatus with a kit for revamping according to an embodiment of the invention,
- figure 2 shows a sectional view of the apparatus of figure 1, from which a lid is removed,
- figure 3 shows in section a bushing of the apparatus which is alternative with respect to that visible in figure 2,

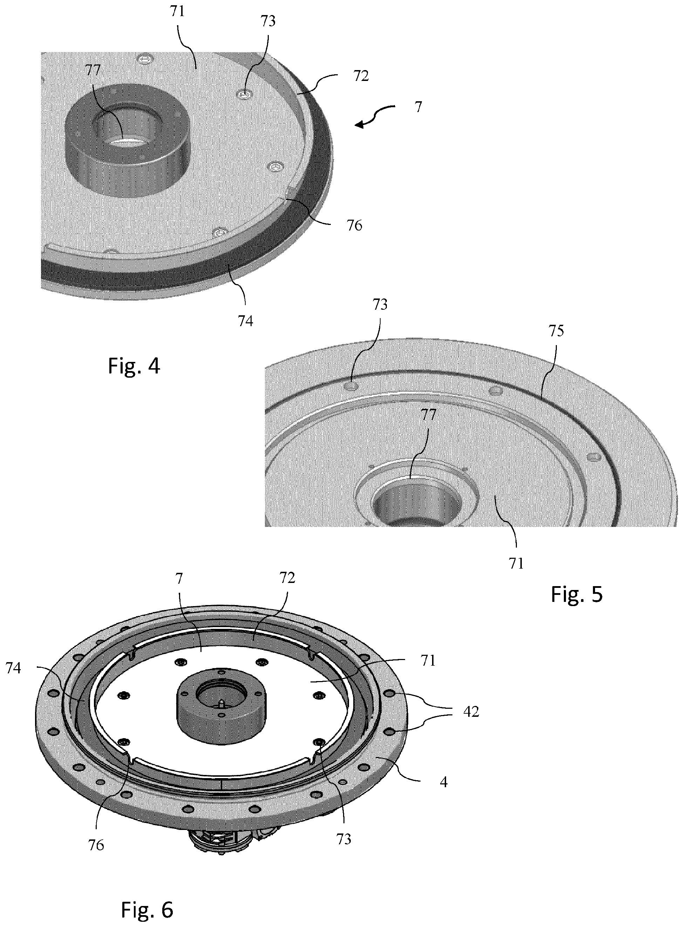

- figure 4 shows a bottom perspective view of a part of an upper support of the kit for revamping,
- figure 5 shows a top perspective view of a part of the upper support of figure 4,
- figure 6 shows a bottom perspective view of the lid of the apparatus of figure 1, with the upper support of figures 4 and 5 mounted,
- figure 7 shows a perspective view of an annular lower support of the kit for revamping,
- figure 8 schematically shows a perspective view of a filter device of the kit for revamping,
- figure 9 schematically shows a perspective view of a part of a filter device of the starting apparatus,
- figure 10 shows a sectional view of a part of the filter device of figure 9;
- figures 11, 12 and 15 show in section some details of the positioning of the filter device and of the upper and lower supports of figures 4 to 8 in the apparatus of figure 1,
- figures 13 and 14 show in section some assembly steps of the kit for revamping in the apparatus of figure 1,
- figures 16 and 17 show some diaphragms of the kit for revamping.

### DETAILED DESCRIPTION

A liquid filtering apparatus 1 in accordance with an aspect of the invention is shown in the figures. Such an apparatus 1 is obtainable, with a method of revamping, from a starting liquid filtering apparatus and a kit for revamping a liquid filtering apparatus. The method of revamping also represents an independent aspect of the present invention.

As will be clear from the following, some components are common between the starting filtering apparatus and the filtering apparatus 1 of the invention, i.e., that which is obtained following the modification of the starting apparatus. For other components, a replacement of the starting apparatus component with a corresponding but different component of the kit is envisaged.

Therefore, in the following the term "starting" will indicate a component included in the starting apparatus, regardless of whether or not it is conserved in the apparatus 1 of the invention resulting after the revamping. If the expression "starting" is instead omitted, it is intended to designate a component of the kit or of the apparatus 1 of the invention, regardless of whether or not it was present in the starting apparatus, unless the context makes it evident that the component in question belonged only to the starting apparatus.

In the figures, the starting apparatus is not shown in its entirety, but some of its parts are visible in that they are also included in the apparatus 1 of the invention, and other of its parts are illustrated individually.

The filtering apparatus 1 of the invention comprises a shell 2, which is the same shell as the starting apparatus. The features of the shell 2, although known, are described here to better understand the features of the kit for revamping described below.

The shell 2 has an interior compartment for housing various components described below, and for the flow of a liquid to be filtered. The shell 2 also has an upper opening 21 for accessing the interior compartment. The upper opening 21 is spaced in a height direction X-X, or axial direction, from a bottom 22 of the shell 2.

A side wall 23 of the shell 2 extends from the bottom 22 to the upper opening 21 and surrounds the interior compartment. In the illustrated embodiment, the side wall 23 has a lower portion 231, proximal to the bottom 22, an upper portion 232, proximal to the upper opening 21, and a step 233 connecting the lower portion 231 and the upper portion 232. The lower portion 231 and the upper portion 232 of the side wall 23 are substantially cylindrical, where the top portion 232 has a greater radius than the lower portion 231.

In a known manner, the shell 2 has a fluid inlet 24 for a liquid to be filtered to inwardly flow in the interior compartment, precisely in a central region of the interior compartment. The shell 2 then has a fluid outlet 25 for the filtered liquid to outwardly flow from the interior compartment, precisely from a peripheral region of the interior compartment, around the central region. The fluid inlet 24 and the fluid outlet 25 are configured in a known manner for the connection to hydraulic ducts outside the apparatus 1.

In preferred embodiments, the fluid inlet 24 and the fluid outlet 25 are spaced from each other in the height direction X-X. In detail, the fluid inlet 24 is formed in the lower portion 231 of the side wall 23 of the shell 2, while the fluid outlet 25 is formed in the upper portion 232.

In a known manner, the shell 2 comprises a suction duct 26 for the ejection of retained residues. The suction duct 26 has a support portion 261, which is located inside the interior compartment of the shell 2 and is oriented for the flow of the retained residues in the height direction X-X. Preferably, the support portion 261 of the suction duct 26 protrudes in the height direction X-X from the bottom 22 of the shell 2.

Optionally, the apparatus 1, as well as the starting apparatus, comprises a coarse filter 3, of known type, with a plurality of openings (not illustrated). The coarse filter 3 is shaped and positioned in the interior compartment so as to retain coarse particulate present in the liquid coming from the fluid inlet 24. In the figures the coarse filter 3 is depicted in cup-shaped form, with a substantially cylindrical side wall 31 and a bottom wall 32. The coarse filter 3 is surrounded by the lower portion 231 of the side wall 23 of the shell 2. The bottom wall 32 of the coarse filter 3 has an opening 33 through which the support portion 261 of the suction duct 26 extends.

The apparatus 1 of the invention, like the starting apparatus, comprises a lid 4 configured to close and seal the upper opening 21 of the shell 2. For this purpose, the lid 4 can for example comprise an O-ring 46 positioned to contact the side wall 23 of the shell 2. Furthermore, the side wall 23 and the lid 4 can be arranged for mutual fastening, for example by means of screws 41 to engage in holes 42, 27 of the lid 4 and of the shell 2, which can be aligned with each other.

In the starting apparatus, a starting filter device 5a is housed in the interior compartment of the shell 2. It separates the central region from the peripheral region of the interior compartment.

The starting filter device 5a comprises an inner support 51a and an outer support 52a, each having a substantially cylindrical side wall with a plurality of openings 53a, for example rows of circular holes (only some openings 53a are illustrated in figure 9, although they are meant to be distributed substantially over the entire side wall). The inner support 51a is housed in the outer support 52a, at a starting distance.

A rigid, pleated starting filter element 54a with a plurality of openings (not shown) is interposed between the inner support 51a and the outer support 52a and is configured to retain residues of a liquid to be filtered which flows through the filter element 54a. It should be noted that the openings of the pleated filter element 54a are smaller with respect to the openings of the coarse filter 3, the inner support 51a and the outer support 52a, to retain the residues of interest.

A lower flange (not illustrated) and an upper flange 55a of the starting filter device 5a connect the inner support 51a and the outer support 52a together. The upper flange 55a comprises fastening elements configured for removable fastening to the lid 4. For example, the upper flange 55a and the lid 4 can have holes 56a, 43 which can be aligned with each other and shaped to receive fastening screws 44. Thereby, the entire starting filter device 5a is fixable to the lid 4.

In the starting filtering apparatus, a starting suction device (not shown) is housed in the interior compartment of the shell 2, namely within the starting inner support 51a of the starting filter device 5a. The starting suction device is configured to suck in residues from the filter element 54a of the starting filter device 5a, and to discharge the residues through the suction duct 26. For this purpose, the starting suction device comprises a rotation shaft, and a suction mouth, connected to the rotation shaft and sliding along the side wall of the inner support 51a, so as to suck in through the openings 53a thereof the residues between the crests of the pleated filter element 54a.

According to an aspect of the invention, the kit for revamping comprises a filter device 5 for replacing the starting filter device 5a. In fact, the method of revamping comprises removing the starting filter device 5a from the starting filtering apparatus.

The filter device 5 of the invention is adapted to be inserted and extracted from the interior compartment of the shell 2 through the upper opening 21 without being fixed to the closing lid. Similar to the starting filter device 5a, the filter device 5 of the invention comprises an inner support 51 and an outer support 52, each having a substantially cylindrical side wall, for example in the form of a basket.

The side walls of the inner and outer supports 51, 52 have a plurality of openings 53. However, in the preferred embodiment the openings 53 are not rows of circular holes, but the side walls of the inner support 51 and/or of the outer support 52, preferably both, have a lattice structure, with advantages of lower weight and greater suction power, as detailed below.

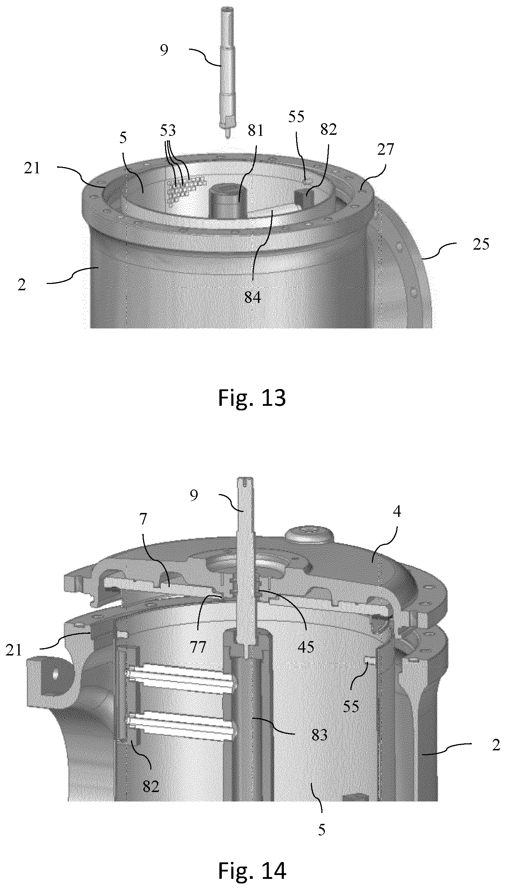

By lattice structure it is meant that the side walls consist of linear elements interwoven with each other or joined together, for example as a weft and a warp, at the ends thereof so as to contour the openings 53. The openings 53 and the lattice structure are only illustrated schematically in figures 8 and 13.

The inner support 51 is concentrically housed in the outer support 52. A filter element 54 is interposed between the inner support 51 and the outer support 52 and is configured to retain residues of the liquid to be filtered which flows through the filter element 54. Unlike the starting filter element 5a, the filter element 54 of the invention is made of a filtration fabric, held between the inner support 51 and the outer support 52. In particular, it is understood that the filter element 54 is made of a loose fabric, and therefore is susceptible to change shape to adapt to the positioning between the inner support 51 and the outer support 52.

Optionally, the filter element 54 can be at least partially turned up to secure to at least one edge 511, 512, 521, 522 of the inner support 51 and/or the outer support 52. The inner support 51, outer support 52 and filter element 54 are therefore arranged in a sandwich. Preferably, the filter element 54 has an inner surface and an outer surface which are both substantially circular.

The use of a filtration fabric further reduces the weight of the filter device 5. A further advantage is that the part to be changed for maintenance is only the fabric filter element 54, while the inner and outer supports 51, 52 are preferably reused.

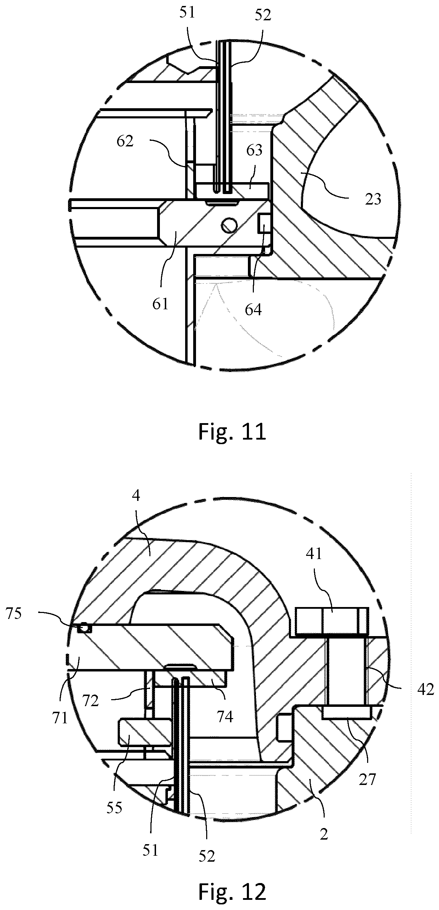

Furthermore, since it is a non-rigid material and not necessarily pleated, the distance between the inner support 51 and the outer support 54 can be smaller with respect to the starting distance between the inner support 51a and the outer support 52a of the starting filter device 5a. In this regard, figure 8 shows distances not to scale, while the distance between the inner support 51 and the outer support 54 can be more correctly understood from figures 11, 12 and 15.

As there is no need for a specific rotational alignment between the filter element 54 and the inner and outer supports 51, 52, it is also not necessary that the inner and outer supports 51, 52 are fixed to each other by means of flanges. In the preferred embodiment, the inner support 51 is slidable in the height direction X-X along the outer support 52.

Comparing the filter device 5 of the invention with the starting filter device 5a, examples of filter devices 5 with a weight between 5 and 15 kg were made, to be used in filtering apparatuses 1 which previously accommodated starting filter devices 5a with weights between 50 and 100 kg. This clearly simplifies the maintenance of the filtering apparatus 1.

For the purpose of a stable positioning of the filter device 5 in the interior compartment of the shell 2, the kit comprises a lower support 6 of substantially annular shape. This was not envisaged in the prior art, since the starting filter device 5a could lay on a lower flange thereof, which connected the inner support 51a and the outer support 52a.

In the assembled condition, the lower support 6 is laid in the interior compartment of the shell 2, precisely on the step 233. Therefore, the lower support 6 is placed above the coarse filter 3. In turn, the filter device 5 is laid on the lower support 6.

Preferably, the lower support 6 comprises a base ring 61 and a circular rib 62 protruding in the height direction X-X from the base ring 61. The circular rib 62 is shaped to engage with a face of the side wall of the inner support 51 and/or the outer support 52 of the filter device 5. In the illustrated embodiment, the rib 62 engages an inner face of the side wall of the inner support 51 from the inside.

The lower support 6 comprises a first sealing element 63 configured to reversibly engage with a lower portion of the filter device 5. Preferably, the first sealing element 63 of the lower support 6 is configured to engage with lower edges 511, 521 of the side walls of the inner support 51 and the outer support 52. Still preferably, the filter device 5 is therefore removable and disengageable from the lower support 6 to allow the maintenance and/or cleaning thereof.

In the illustrated embodiment, the first sealing element 63 of the lower support 6 is an annular gasket positioned on the base ring 61 and oriented axially towards the filter device 5.

In addition, the lower support 6 comprises a second sealing element 64 configured to engage with the shell 2, and in particular with the side wall 23 of the shell 2, for example with the step 233, or alternatively with the lower portion 231 or the upper portion 232 of the side wall 23.

In the illustrated embodiment the second sealing element 64 of the lower support 6 is an O-ring housed in a groove of the base ring 61 and is directed radially towards the side wall 23 of the shell 2.

For the purpose of a stable positioning of the filter device 5 with respect to the lid 4, the kit comprises an upper support 7. This was not envisaged in the prior art, since the lid 4 could be fixed directly on an upper flange connecting the inner support 51a and the outer support 52a of the starting filter device 5a.

In the assembled condition, the upper support 7 lays on the filter device 5 and is positioned at a lower face of the lid 4, facing the interior compartment. Consequently, the upper support 7 is removable and disengageable from the filter device 5 to allow the maintenance and/or cleaning thereof.

Preferably, the upper support 7 comprises a disc portion 71 and a circular rib 72 protruding in the height direction X-X from the disc portion 71. The circular rib 72 is shaped to engage with a face of the side wall of the inner support 51 and/or the outer support 52 of the filter device 5. In the illustrated embodiment, the rib 72 engages an inner face of the side wall of the inner support 51 from the inside.

The upper support 7 comprises fastening elements 73 configured for the removable fastening to the lid 4. The fastening elements 73 can be made as holes, preferably formed in the disc portion 71.

The holes 73 of the upper support 7 are arranged so as to be alignable with the holes 43 of the lid 4, so that they are both engaged by the fastening screws 44. Advantageously, the same manners of fastening the lid 4 to the starting filter device 5a can be applied without modifications also for fastening the lid 4 to the upper support 7. Other examples of fastening elements 73 can however be envisaged by those skilled in the art.

In addition, the upper support 7 comprises a first sealing element 74 configured to reversibly engage with an upper portion of the filter device 5. Preferably, the first sealing element 74 of the upper support 7 is configured to engage with upper edges 521, 522 of the side walls of the inner support 51 and the outer support 52.

In the illustrated embodiment, the first sealing element 74 of the upper support is an annular gasket positioned on the disc portion 71 and oriented axially towards the filter device 5.

Preferably, the upper support 7 also comprises a second sealing element 75 configured to engage with the lid 4. In the illustrated embodiment the second sealing element 75 of the upper support 7 is an O-ring housed in a groove of the disc portion 71 and is axially facing the lid 4.

The first and the second sealing element 63, 64, 74, 75 of the upper 7 and lower 6 supports are preferably made of polymeric material, e.g., elastomeric, material.

By virtue of the described sealing elements, the liquid to be filtered entering from the fluid inlet 24 must necessarily pass through the filter device 5 before exiting from the compartment through the fluid outlet 25.

Preferably, the filter device 5 and the upper support 7 comprise complementary rotational constraint members 55, 76 configured to prevent the rotation of the filter device 5 with respect to the upper support 7.

In the preferred embodiment, the rotational constraint members 55, 76 comprise slots 76 and pins 55 insertable in the slots 76. As illustrated, the pins 55 can protrude radially from the inner support 51. Furthermore, the slots 76 can be axial open slots formed in the circular rib 72 of the upper support 7. The pins 55 can thus be insertable in the slots 76 along the height direction X-X.

In the preferred embodiments of the invention, the kit comprises a suction device 8 thereof, to replace the starting suction device. However, in less advantageous alternatives it is also possible to replace only the starting filtration device 5a but keep the starting suction device.

The suction device 8 is configured to be positioned in the interior compartment, surrounded by the inner support 51 of the filtration device 5. The suction device 8 comprises a shaft 81 configured to be rotatably connected at least to the shell 2, and optionally also to the lid 4.

In the illustrated embodiment, transmission elements 9 are connected to an upper end portion of the shaft 81 and extend through central openings 45, 77 of the lid 4 and of the upper support 7. Furthermore, a motor 10 outside the shell 2 is connectable to the transmission elements 9 to rotate the shaft 81.

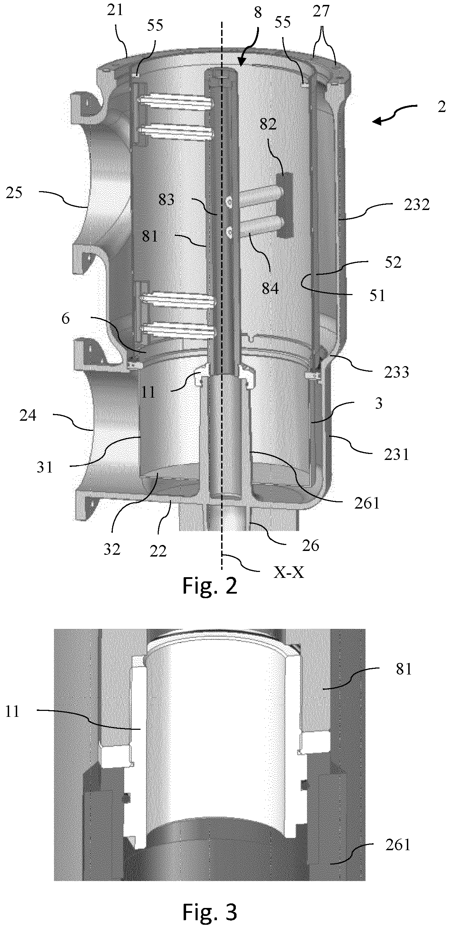

In addition, the shaft 81 is rotatably connectable to the shell 2 at the suction duct 26, precisely the support portion 261. For this purpose, the kit preferably comprises a bushing 11 configured for the rotatable connection between the rotation shaft 81 and the suction duct 26. The bushing 11 can be connectable inside and/or outside a lower end portion of the shaft 81, and furthermore inside and/or outside the suction duct 26. Examples of these alternatives can be seen in figures 2 and 3.

The suction device 8 further comprises suction means 82, for example in the form of one or more suction mouths connected to the shaft 81 and projecting radially from the shaft 81. The suction means 82 are configured to slide along the side wall of the inner support 51 of the filter device 5.

The suction device 8 has a system of inner channels 83 which extend through the suction means 82 and the shaft 81. The inner channels 83 are open towards the inner surface of the inner support 51 of the filter device 5, at the suction means. Furthermore, the inner channels 83 are in fluid communication with the suction duct 26.

By virtue of the pressure difference between the interior compartment and the outer environment at the opposite end of the suction duct 26, the suction means 82 are configured to suck in the residues which have been filtered and deposited on the filter element 54. The suction force exerted by the suction means 82 is in fact transmitted to the filter element 54 through the openings 53 of the side wall of the inner support 51 of the filter device 5.

The sucked in residues are discharged through the shaft 81, along the system of inner channels 83, to the suction duct 26 and then outside the apparatus 1.

It should be noted that the dimensioning of the starting filtering apparatus 5a is such as to determine a sufficient suction force for cleaning the starting filter element 54a. In the filter device 5 of the kit according to the invention, the openings 53 of the side wall of the inner support 51 of the filter device 5 can be considerably larger in number and/or size with respect to the starting filter device 5a. Moreover, the filter element 54 of the filter device 5 of the kit according to the invention can be much closer to such openings 53 with respect to the starting filter element 54a.

For these reasons, the suction is significantly more effective, to the point that, depending on the material of the filter element 54 and the dimensioning of the starting apparatus, a risk of damage of the filter element 54 may arise due to excessive suction forces.

In such a case, the kit preferably comprises a set of diaphragms 12 configured for positioning in series with the suction duct 26, for example outside the shell 2. Each diaphragm 12 has openings 121 for the flow of the residues. The openings 121 of different diaphragms 12 of the set are different in number and/or have surfaces with different cross sections.

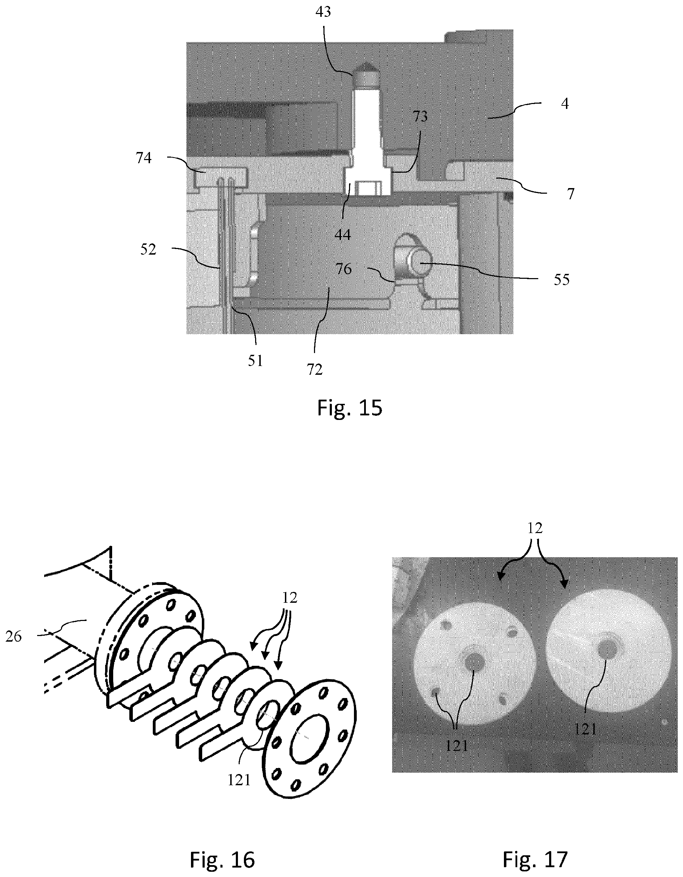

Figures 16 shows multiple diaphragms 12 placed in series with each other, and for simplicity they have been illustrated with openings 121 of the same size. Figure 17 shows two diaphragms 12 with different numbers of openings 121 and different surfaces' cross sections of the openings 121.

The positioning of one or more diaphragms 12 reduces the suction force, preserving the filter element 54 and at the same time ensuring sufficient suction.

In preferred embodiments, the suction device 8 comprises elastic means (not shown), for example springs, which are configured to elastically press the suction means 82 towards the side wall of the inner support 51 of the filter device 5. More in detail, each suction mouth is connected to the rotation shaft 81 through one or more tubes 84 and is radially slidable along the one or more tubes 84. The elastic means are positioned so as to press each suction mouth radially along one or more tubes 84 away from the rotation shaft 81.

Advantageously, the elastic means maintain the suction means 82 adherent to the inner support 51 following any irregularities during rotation without damage. The adhesion can be improved with respect to the starting suction means, without elastic means, causing an enhancement of the suction capacity towards the filter element 54.

The rotational constraint members 55, 76 however prevent rotary movements of the filter device 5 determined by the contact with the rotating suction device 8.

Comparing the suction device 8 of the invention with the starting suction device, examples of suction devices 8 with a weight between 5 and 10 kg were made, to be used in filtering apparatuses 1 which previously accommodated starting suction devices with weights between 30 and 40 kg. This clearly simplifies the maintenance of the filtering apparatus 1.

A method of revamping a liquid filtering apparatus, starting from a starting filtering apparatus and a kit for revamping, is now described.

The starting filtering apparatus comprises the shell 2, the lid 4, the starting filter device 5a, and the starting suction device, as already described.

The method includes removing the lid 4 from the upper opening 21 of the shell 2. Then, the starting filter device 5a is removed from the filtering apparatus through the upper opening 21. Generally, this involves also removing the starting suction device through the upper opening 21.

Next, the method comprises laying the lower support 6 of the kit in the interior compartment of the shell 2, preferably at the step 233, making a seal with the second sealing element 64 of the lower support on the side wall 23 of the shell 2.

The method proceeds by inserting the filter device 5 of the kit in the interior compartment until a lower portion of the filter device 5 reversibly engages the first sealing element 64 of the lower support 6. The filter device 5 is positioned such that the slots 76 of the upper support 7 are alignable with the pins 55.

In the preferred embodiments, the suction device 8 of the kit is inserted in the interior compartment of the shell 2, surrounded by the inner support 51 of the filter device 5. In less advantageous embodiments, the starting suction device can be reinserted in the same position.

In both cases, the rotation shaft 81 of the suction device 8 is rotatably connected to the shell 2, for example by fixing the bushing 26 to the shaft 81, and then fitting the bushing 11 on the suction duct 26.

Where applicable, the transmission elements 9 are connected to an upper end portion of the shaft 81.

The method also comprises fastening the upper support 7 of the kit to the lid 4, acting on the fastening elements 73, i.e., by means of the screws 44. Where envisaged, the second sealing element 75 of the upper support 7 is engaged with the lid 4.

Subsequently, the method comprises closing by means of the lid 4 the upper opening 21 of the shell 2, reversibly engaging the first sealing element 74 of the upper support 4 with an upper portion of the filter device 5.

Simultaneously, where envisaged, the pins 55 engage the slots 76, and the transmission elements 9 pass through the central openings 45, 77 of the lid 4 and of the upper support 7. The motor 10 can thus be connected to the transmission elements 9 to start the filtering apparatus 1, rotating the suction device 8, when the liquid is made to flow in the interior compartment.

In the preferred embodiments, the method of revamping proceeds with starting the filtering apparatus 1 and measuring a pressure in the interior compartment. The measured pressure is compared to a reference pressure range. If the pressure is outside the reference range, the method of revamping comprises placing or replacing one or more diaphragms 12 of the kit in series with the suction duct 26, so as to bring the pressure inside the compartment back into the reference range.

Lastly, a maintenance method for a filtering apparatus for liquids 1 is described.

The maintenance method comprises removing the lid 4 from the upper opening 21 of the shell 2 and, in detail, disengaging the upper support 7 from the filter device 5 to remove the lid 4. Then, the suction device 8 and the filter device 5 are removed from the filtering apparatus 1 through the upper opening 21. It should be noted that the filter device 5 is then disengaged and removed from the lower support 6.

Subsequently, the inner support 51 and the filter element 5 are removed, preferably one at a time, from the outer support 52 of the filter device 5. The filter element 54 is washed or replaced. It should be noted that the pleated starting filter device 5a requires much more complex washes with respect to the filter element 54 of the kit of the invention. In fact, the starting filter device 5a must be immersed for a long time in a special solution for washing since there is no disassembly of the filter element which in any case is not textile like that of the invention.

Thus, the filter element 54, new or cleaned, and the inner support 51, are inserted back into the outer support 52, preferably one at a time.

Finally, the filter device 5 and the suction device 8 are reinserted in the interior compartment through the upper opening 21 of the shell 2, engaging the filter device 5 to the lower support 6, and the lid 4 is reapplied to the upper opening 21, engaging the upper support 7 to the filter device 5.

Obviously, a person skilled in the art will be able to make numerous equivalent modifications to the variants set forth above, without thereby abandoning the scope of protection defined by the appended claims.

## Claims

1. A method of revamping a liquid filtering apparatus, comprising the step of providing a starting liquid filtering apparatus, that comprises:
- a shell (2) having an interior compartment, an upper opening (21) for accessing the interior compartment, a fluid inlet (24) and a fluid outlet (25) for a liquid to flow in the interior compartment, and a suction duct (26) for ejecting retained residues,
- a lid (4) configured to close and seal the upper opening (21) of the shell (2),
- a starting filter device (5a), housed in the interior compartment of the shell (2), and comprising:
- an inner support (51a) and an outer support (52a), each having a substantially cylindrical side wall with a plurality of openings (53a), the inner support (51a) being housed in the outer support (52a), and
- a pleated filter element (54a) interposed between the inner support (51a) and the outer support (52a) and configured to retain residues of a liquid to be filtered which flows through the filter element (54a),
- a suction device (8) housed in the interior compartment and configured to suck in residues from the filter element (54a) of the starting filter device (5a) and discharge the residues through the suction duct (26),
wherein the method comprises:
- removing at least the starting filter device (5a) from the starting filtering apparatus,
- providing a kit for revamping a liquid filtering apparatus (1), comprising:
- a filter device (5), adapted to be introduced into an interior compartment of the shell (2) of the liquid filtering apparatus (1) through the upper opening (21) of the shell (2), comprising:
- an inner support (51) and an outer support (52), each having a substantially cylindrical side wall with a plurality of openings (53), the inner support (51) being housed in the outer support (52), and
- a filter element (54) interposed between the inner support (51) and the outer support (52) and configured to retain residues of a liquid to be filtered which flows through the filter element (54), the filter element (54) being made of a loose filtration fabric held between the inner support (51) and the outer support (52), the filter element (54) being removable from the inner and outer supports (51, 52),
- an annular lower support (6), configured to lay in the interior compartment of the shell (2), and having a first sealing element (63) and a second sealing element (64) configured to engage with a lower portion of the filter device (5) and with the shell (2) respectively, and
- an upper support (7), comprising fastening elements (73) configured for removable fastening to the lid (4) of the filtering apparatus (1) for the upper opening (21) of the shell (2), and a first sealing element (74) configured to engage with an upper portion of the filter device (5),
wherein the upper support (7) is removable from the filter device (5), and the filter device (5) is removable from the lower support (6)
- laying the annular lower support (6) in the interior compartment of the shell (2),
- inserting the filter device (5) of the kit in the interior compartment until a lower portion of the filter device (5) of the kit engages the first sealing element (63) of the lower support (6),
- fastening the upper support (7) to the lid (4) using the fastening elements (73),
- closing the upper opening (21) of the shell (2) with the lid (4), while engaging the first sealing element (74) of the upper support (7) with an upper portion of the filter device (5) of the kit.

2. A method as claimed in claim 1, wherein the side walls of the inner support (51) and the outer support (52) have a lattice structure.

3. A method as claimed in claim 1 or 2, wherein the first sealing element (63) of the lower support (6) engages with lower edges (511, 521) of the side walls of the inner support (51) and the outer support (52), and the first sealing element (74) of the upper support (7) engages with upper edges (512, 522) of the side walls of the inner support (51) and of the outer support (52).

4. A method as claimed in any of claims 1 to 3, wherein the upper support (7) and the lower support (6) each comprise a circular rib (72, 62), which is shaped to engage the side wall of the inner support (51) and/or the outer support (52) of the filter device (5).

5. A method as claimed in any of claims 1 to 4, wherein the upper support (7) and the filter device (5) comprise complementary rotational constraint members (55, 76) configured to prevent rotation of the filter device (5) relative to the upper support (7), wherein the rotational constraint members (55, 76) preferably comprise axial slots (76) and radial pins (55) designed to fit into the slots (76).

6. A method as claimed in any of claims 1 to 5, wherein the liquid filtering apparatus comprises a suction device (8) configured to be surrounded by the inner support (51), the suction device (8) comprising a shaft (81) configured to be rotatably connected to the shell (2) of the filtering apparatus (1), and suction means (82) configured to slide along the side wall of the inner support (51) of the filter device (5), to suck in retained residues from the filter element (54), and to discharge the residues through the shaft (81) to a suction duct (26) of the filtering apparatus (1),
wherein the suction device (8) preferably comprises elastic means configured to bias the suction means (82) towards the side wall of the inner support (51).

7. A method as claimed in claim 6, wherein the apparatus comprises a set of diaphragms (12) configured for positioning in series with the suction duct (26) of the filtering apparatus (1), the diaphragms (12) of the set having openings (121) in different numbers and/or with surfaces having different cross sections.

8. A method as claimed in claim 6 or 7, comprising a bushing (11) configured for rotatable connection between the shaft (81) of the suction device (8) and the suction duct (26) of the filtering apparatus (1).

9. A liquid filtering apparatus (1) obtainable by revamping according to the method of any claim from 1 to 8, comprising:
- a shell (2) having an interior compartment, an upper opening (21) for accessing the interior compartment, a fluid inlet (24) and a fluid outlet (25) for a liquid to flow in the interior compartment, and a suction duct (26) for ejecting retained residues,
- a lid (4) configured to close and seal the upper opening (21) of the shell (2),
- a suction device (8) housed in the interior compartment, comprising a shaft (81) rotatably connected to the shell (2),
- a filter device (5) housed into the interior compartment of the shell (2) and interposed between the fluid inlet (24) and the fluid outlet (25), the filter device (5) being adapted to be extracted and inserted into the interior compartment through the upper opening (21), the filter device (5) comprising:
- an inner support (51) and an outer support (52), each having a substantially cylindrical side wall with a plurality of openings (53), the inner support (51) being housed in the outer support (52) and surrounding the suction device (8),
- a filter element (54) interposed between the inner support (51) and the outer support (52) and configured to retain residues of a liquid to be filtered which flows through the filter element (54), the filter element (54) being made of a loose filtration fabric held between the inner support (51) and the outer support (52), the filter element (54) being removable from the inner and outer supports (51, 52),
- an annular lower support (6) laying in the interior compartment of the shell (2) with a first sealing element (63) and a second sealing element (64) engaging with a lower portion of the filter device (5) and with the shell (2), respectively,
- an upper support (7) fastened to the lid (4), comprising fastening elements (73) for the lid (4) and a first sealing element (74) engaging an upper portion of the filter device (5), wherein
the upper support (7) is removable from the filter device (5), and the filter device (5) is removable from the lower support (6), and
- the suction device (8) comprises suction means (82) in fluid communication with the suction duct (26) via the shaft (81) and configured to slide along the side wall of the inner support (51) to suck in retained residues from the filter element (54), and to discharge the residues through the shaft (81) to the suction duct (26).

## Patentansprüche

1. Ein Verfahren zur Modernisierung einer Flüssigkeitsfiltervorrichtung, umfassend den Schritt des Bereitstellens einer anfänglichen Flüssigkeitsfiltervorrichtung, die umfasst:
∘ ein Gehäuse (2) mit einem Innenraum, einer oberen Öffnung (21) für den Zugang zum Innenraum, einem Fluideinlass (24) und einem Fluidauslass (25) für eine Flüssigkeit, die durch den Innenraum strömen soll, und einem Saugkanal (26) zum Ausstoßen von zurückgehaltenen Rückständen,
∘ einen Deckel (4), der dazu ausgebildet ist, die obere Öffnung (21) des Gehäuses (2) zu verschließen und abzudichten,
∘ eine anfängliche Filtervorrichtung (5a), die im Innenraum des Gehäuses (2) untergebracht ist und Folgendes umfasst:
▪ einen inneren Träger (51a) und einen äußeren Träger (52a), die jeweils eine im Wesentlichen zylindrische Seitenwand mit einer Vielzahl von Öffnungen (53a) aufweisen, wobei der innere Träger (51a) in dem äußeren Träger (52a) untergebracht ist, und
▪ ein plissiertes Filterelement (54a), das zwischen dem inneren Träger (51a) und dem äußeren Träger (52a) eingefügt und dazu ausgebildet ist, Rückstände einer zu filternden Flüssigkeit zurückzuhalten, die durch das Filterelement (54a) fließt,
∘ eine Saugvorrichtung (8), die im Innenraum untergebracht und dazu ausgebildet ist, Rückstände vom Filterelement (54a) der anfänglichen Filtervorrichtung (5a) anzusaugen und die Rückstände durch den Saugkanal (26) abzuführen, wobei das Verfahren umfasst:
∘ Entfernen zumindest der anfänglichen Filtervorrichtung (5a) aus der anfänglichen Flüssigkeitsfiltervorrichtung,
∘ Bereitstellen eines Bausatzes zur Modernisierung einer Flüssigkeitsfiltervorrichtung (1), umfassend:
▪ eine Filtervorrichtung (5), die dazu angepasst ist, durch die obere Öffnung (21) des Gehäuses (2) der Flüssigkeitsfiltervorrichtung (1) in einen Innenraum des Gehäuses (2) eingeführt zu werden, umfassend:
▪ einen inneren Träger (51) und einen äußeren Träger (52), die jeweils eine im Wesentlichen zylindrische Seitenwand mit einer Vielzahl von Öffnungen (53) aufweisen, wobei der innere Träger (51) in dem äußeren Träger (52) untergebracht ist, und
▪ ein Filterelement (54), das zwischen dem inneren Träger (51) und dem äußeren Träger (52) eingefügt und dazu ausgebildet ist, Rückstände einer zu filternden Flüssigkeit zurückzuhalten, die durch das Filterelement (54) fließt, wobei das Filterelement (54) aus einem losen Filtrationsgewebe hergestellt ist, das zwischen dem inneren Träger (51) und dem äußeren Träger (52) gehalten wird, wobei das Filterelement (54) von dem inneren und dem äußeren Träger (51, 52) entfernbar ist,
▪ einen ringförmigen unteren Träger (6), der dazu ausgebildet ist, im Innenraum des Gehäuses (2) zu liegen, und ein erstes Dichtungselement (63) und ein zweites Dichtungselement (64) aufweist, die dazu ausgebildet sind, mit einem unteren Abschnitt der Filtervorrichtung (5) bzw. mit dem Gehäuse (2) in Eingriff zu gelangen, und
▪ einen oberen Träger (7), umfassend Befestigungselemente (73), die für eine lösbare Befestigung am Deckel (4) der Filtervorrichtung (1) für die obere Öffnung (21) des Gehäuses (2) ausgebildet sind, und ein erstes Dichtungselement (74), das dazu ausgebildet ist, mit einem oberen Abschnitt der Filtervorrichtung (5) in Eingriff zu gelangen, wobei der obere Träger (7) von der Filtervorrichtung (5) entfernbar ist und die Filtervorrichtung (5) von dem unteren Träger (6) entfernbar ist,
∘ Einlegen des ringförmigen unteren Trägers (6) in den Innenraum des Gehäuses (2),
∘ Einsetzen der Filtervorrichtung (5) des Bausatzes in den Innenraum, bis ein unterer Abschnitt der Filtervorrichtung (5) des Bausatzes mit dem ersten Dichtungselement (63) des unteren Trägers (6) in Eingriff gelangt,
∘ Befestigen des oberen Trägers (7) am Deckel (4) unter Verwendung der Befestigungselemente (73),
∘ Verschließen der oberen Öffnung (21) des Gehäuses (2) mit dem Deckel (4), während das erste Dichtungselement (74) des oberen Trägers (7) mit einem oberen Abschnitt der Filtervorrichtung (5) des Bausatzes in Eingriff gebracht wird.

2. Verfahren nach Anspruch 1, wobei die Seitenwände des inneren Trägers (51) und des äußeren Trägers (52) eine Gitterstruktur aufweisen.

3. Verfahren nach Anspruch 1 oder 2, wobei das erste Dichtungselement (63) des unteren Trägers (6) mit unteren Kanten (511, 521) der Seitenwände des inneren Trägers (51) und des äußeren Trägers (52) in Eingriff gelangt, und das erste Dichtungselement (74) des oberen Trägers (7) mit oberen Kanten (512, 522) der Seitenwände des inneren Trägers (51) und des äußeren Trägers (52) in Eingriff gelangt.

4. Verfahren nach einem der Ansprüche 1 bis 3, wobei der obere Träger (7) und der untere Träger (6) jeweils eine kreisförmige Rippe (72, 62) umfassen, die geformt ist, um mit der Seitenwand des inneren Trägers (51) und/oder des äußeren Trägers (52) der Filtervorrichtung (5) in Eingriff zu gelangen.

5. Verfahren nach einem der Ansprüche 1 bis 4, wobei der obere Träger (7) und die Filtervorrichtung (5) komplementäre Drehsicherungselemente (55, 76) umfassen, die dazu ausgebildet sind, eine Drehung der Filtervorrichtung (5) relativ zum oberen Träger (7) zu verhindern, wobei die Drehsicherungselemente (55, 76) vorzugsweise axiale Schlitze (76) und radiale Stifte (55) umfassen, die dazu ausgelegt sind, in die Schlitze (76) zu passen.

6. Verfahren nach einem der Ansprüche 1 bis 5, wobei die Flüssigkeitsfiltervorrichtung eine Saugvorrichtung (8) umfasst, die dazu ausgebildet ist, von dem inneren Träger (51) umgeben zu sein, wobei die Saugvorrichtung (8) eine Welle (81) umfasst, die dazu ausgebildet ist, drehbar mit dem Gehäuse (2) der Filtervorrichtung (1) verbunden zu sein, und Saugmittel (82), die dazu ausgebildet sind, entlang der Seitenwand des inneren Trägers (51) der Filtervorrichtung (5) zu gleiten, um zurückgehaltene Rückstände von dem Filterelement (54) anzusaugen und die Rückstände durch die Welle (81) zu einem Saugkanal (26) der Filtervorrichtung (1) abzuführen, wobei die Saugvorrichtung (8) vorzugsweise elastische Mittel umfasst, die dazu ausgebildet sind, die Saugmittel (82) in Richtung der Seitenwand des inneren Trägers (51) vorzuspannen.

7. Verfahren nach Anspruch 6, wobei die Vorrichtung einen Satz von Membranen (12) umfasst, die zur Positionierung in Reihe mit dem Saugkanal (26) der Filtervorrichtung (1) ausgebildet sind, wobei die Membranen (12) des Satzes Öffnungen (121) in unterschiedlicher Anzahl und/oder mit Flächen mit unterschiedlichen Querschnitten aufweisen.

8. Verfahren nach Anspruch 6 oder 7, umfassend eine Buchse (11), die für eine drehbare Verbindung zwischen der Welle (81) der Saugvorrichtung (8) und dem Saugkanal (26) der Filtervorrichtung (1) ausgebildet ist.

9. Eine Flüssigkeitsfiltervorrichtung (1), erhältlich durch Modernisierung nach dem Verfahren eines der Ansprüche 1 bis 8, umfassend:
∘ ein Gehäuse (2) mit einem Innenraum, einer oberen Öffnung (21) für den Zugang zum Innenraum, einem Fluideinlass (24) und einem Fluidauslass (25) für eine Flüssigkeit, die durch den Innenraum strömen soll, und einem Saugkanal (26) zum Ausstoßen von zurückgehaltenen Rückständen,
∘ einen Deckel (4), der dazu ausgebildet ist, die obere Öffnung (21) des Gehäuses (2) zu verschließen und abzudichten,
∘ eine Saugvorrichtung (8), die im Innenraum untergebracht ist und eine Welle (81) umfasst, die drehbar mit dem Gehäuse (2) verbunden ist,
∘ eine Filtervorrichtung (5), die in den Innenraum des Gehäuses (2) eingesetzt und zwischen dem Fluideinlass (24) und dem Fluidauslass (25) zwischengeschaltet ist, wobei die Filtervorrichtung (5) dazu angepasst ist, durch die obere Öffnung (21) aus dem Innenraum extrahiert und in diesen eingesetzt zu werden, wobei die Filtervorrichtung (5) umfasst:
▪ einen inneren Träger (51) und einen äußeren Träger (52), die jeweils eine im Wesentlichen zylindrische Seitenwand mit einer Vielzahl von Öffnungen (53) aufweisen, wobei der innere Träger (51) in dem äußeren Träger (52) untergebracht ist und die Saugvorrichtung (8) umgibt,
▪ ein Filterelement (54), das zwischen dem inneren Träger (51) und dem äußeren Träger (52) eingefügt und dazu ausgebildet ist, Rückstände einer zu filternden Flüssigkeit zurückzuhalten, die durch das Filterelement (54) fließt, wobei das Filterelement (54) aus einem losen Filtrationsgewebe hergestellt ist, das zwischen dem inneren Träger (51) und dem äußeren Träger (52) gehalten wird, wobei das Filterelement (54) von dem inneren und dem äußeren Träger (51, 52) entfernbar ist,
∘ einen ringförmigen unteren Träger (6), der im Innenraum des Gehäuses (2) liegt, mit einem ersten Dichtungselement (63) und einem zweiten Dichtungselement (64), die mit einem unteren Abschnitt der Filtervorrichtung (5) bzw. mit dem Gehäuse (2) in Eingriff stehen,
∘ einen oberen Träger (7), der am Deckel (4) befestigt ist und Befestigungselemente (73) für den Deckel (4) sowie ein erstes Dichtungselement (74) umfasst, das mit einem oberen Abschnitt der Filtervorrichtung (5) in Eingriff steht, wobei der obere Träger (7) von der Filtervorrichtung (5) entfernbar ist, und die Filtervorrichtung (5) von dem unteren Träger (6) entfernbar ist, und
∘ die Saugvorrichtung (8) Saugmittel (82) in Fluidverbindung mit dem Saugkanal (26) über die Welle (81) umfasst und dazu ausgebildet ist, entlang der Seitenwand des inneren Trägers (51) zu gleiten, um zurückgehaltene Rückstände vom Filterelement (54) anzusaugen und die Rückstände durch die Welle (81) zum Saugkanal (26) abzuführen.

## Revendications

1. Procédé de modernisation d'un appareil de filtration de liquide, comprenant l'étape de fourniture d'un appareil de filtration de liquide de départ, qui comprend :
∘ une enveloppe (2) ayant un compartiment intérieur, une ouverture supérieure (21) pour accéder au compartiment intérieur, une entrée de fluide (24) et une sortie de fluide (25) pour qu'un liquide s'écoule dans le compartiment intérieur, et un conduit d'aspiration (26) pour éjecter des résidus retenus,
∘ un couvercle (4) configuré pour fermer et sceller l'ouverture supérieure (21) de l'enveloppe (2),
∘ un dispositif de filtre de départ (5a), logé dans le compartiment intérieur de l'enveloppe (2), et comprenant :
▪ un support interne (51a) et un support externe (52a), chacun ayant une paroi latérale sensiblement cylindrique avec une pluralité d'ouvertures (53a), le support interne (51a) étant logé dans le support externe (52a), et
▪ un élément filtrant plissé (54a) interposé entre le support interne (51a) et le support externe (52a) et configuré pour retenir des résidus d'un liquide à filtrer qui s'écoule à travers l'élément filtrant (54a),
∘ un dispositif d'aspiration (8) logé dans le compartiment intérieur et configuré pour aspirer des résidus de l'élément filtrant (54a) du dispositif de filtre de départ (5a) et pour évacuer les résidus à travers le conduit d'aspiration (26), le procédé comprenant :
∘ le retrait d'au moins le dispositif de filtre de départ (5a) de l'appareil de filtration de liquide de départ,
∘ la fourniture d'un kit de modernisation d'un appareil de filtration de liquide (1), comprenant :
▪ un dispositif de filtre (5), apte à être introduit dans un compartiment intérieur de l'enveloppe (2) de l'appareil de filtration de liquide (1) à travers l'ouverture supérieure (21) de ladite enveloppe (2), comprenant :
▪ un support interne (51) et un support externe (52), chacun ayant une paroi latérale sensiblement cylindrique avec une pluralité d'ouvertures (53), le support interne (51) étant logé dans le support externe (52), et
▪ un élément filtrant (54) interposé entre le support interne (51) et le support externe (52) et configuré pour retenir des résidus d'un liquide à filtrer qui s'écoule à travers l'élément filtrant (54), l'élément filtrant (54) étant fait d'un tissu de filtration lâche maintenu entre le support interne (51) et le support externe (52), l'élément filtrant (54) étant amovible des supports interne et externe (51, 52),
▪ un support inférieur annulaire (6), configuré pour reposer dans le compartiment intérieur de l'enveloppe (2), et ayant un premier élément d'étanchéité (63) et un second élément d'étanchéité (64) configurés pour venir en prise avec une partie inférieure du dispositif de filtre (5) et avec l'enveloppe (2) respectivement, et
▪ un support supérieur (7), comprenant des éléments de fixation (73) configurés pour une fixation amovible au couvercle (4) de l'appareil de filtration (1) pour l'ouverture supérieure (21) de l'enveloppe (2), et un premier élément d'étanchéité (74) configuré pour venir en prise avec une partie supérieure du dispositif de filtre (5), dans lequel le support supérieur (7) est amovible du dispositif de filtre (5), et le dispositif de filtre (5) est amovible du support inférieur (6),
∘ la pose du support inférieur annulaire (6) dans le compartiment intérieur de l'enveloppe (2),
∘ l'insertion du dispositif de filtre (5) du kit dans le compartiment intérieur jusqu'à ce qu'une partie inférieure du dispositif de filtre (5) du kit vienne en prise avec le premier élément d'étanchéité (63) du support inférieur (6),
∘ la fixation du support supérieur (7) au couvercle (4) en utilisant les éléments de fixation (73),
∘ la fermeture de l'ouverture supérieure (21) de l'enveloppe (2) avec le couvercle (4), tout en mettant en prise le premier élément d'étanchéité (74) du support supérieur (7) avec une partie supérieure du dispositif de filtre (5) du kit.

2. Procédé selon la revendication 1, dans lequel les parois latérales du support interne (51) et du support externe (52) ont une structure en treillis.

3. Procédé selon la revendication 1 ou 2, dans lequel le premier élément d'étanchéité (63) du support inférieur (6) vient en prise avec des bords inférieurs (511, 521) des parois latérales du support interne (51) et du support externe (52), et le premier élément d'étanchéité (74) du support supérieur (7) vient en prise avec des bords supérieurs (512, 522) des parois latérales du support interne (51) et du support externe (52).

4. Procédé selon l'une quelconque des revendications 1 à 3, dans lequel le support supérieur (7) et le support inférieur (6) comprennent chacun une nervure circulaire (72, 62), qui est formée pour venir en prise avec la paroi latérale du support interne (51) et/ou du support externe (52) du dispositif de filtre (5).

5. Procédé selon l'une quelconque des revendications 1 à 4, dans lequel le support supérieur (7) et le dispositif de filtre (5) comprennent des éléments de contrainte en rotation complémentaires (55, 76) configurés pour empêcher la rotation du dispositif de filtre (5) par rapport au support supérieur (7), dans lequel les éléments de contrainte en rotation (55, 76) comprennent de préférence des fentes axiales (76) et des broches radiales (55) conçues pour s'ajuster dans lesdites fentes (76).

6. Procédé selon l'une quelconque des revendications 1 à 5, dans lequel l'appareil de filtration de liquide comprend un dispositif d'aspiration (8) configuré pour être entouré par le support interne (51), le dispositif d'aspiration (8) comprenant un arbre (81) configuré pour être relié en rotation à l'enveloppe (2) de l'appareil de filtration (1), et des moyens d'aspiration (82) configurés pour coulisser le long de la paroi latérale du support interne (51) du dispositif de filtre (5), pour aspirer des résidus retenus de l'élément filtrant (54), et pour évacuer les résidus à travers l'arbre (81) vers un conduit d'aspiration (26) de l'appareil de filtration (1), dans lequel le dispositif d'aspiration (8) comprend de préférence des moyens élastiques configurés pour solliciter les moyens d'aspiration (82) vers la paroi latérale du support interne (51).

7. Procédé selon la revendication 6, dans lequel l'appareil comprend un jeu de diaphragmes (12) configurés pour un positionnement en série avec le conduit d'aspiration (26) de l'appareil de filtration (1), les diaphragmes (12) du jeu ayant des ouvertures (121) en nombres différents et/ou avec des surfaces ayant des sections transversales différentes.

8. Procédé selon la revendication 6 ou 7, comprenant une bague (11) configurée pour une liaison rotative entre l'arbre (81) du dispositif d'aspiration (8) et le conduit d'aspiration (26) de l'appareil de filtration (1).

9. Appareil de filtration de liquide (1) pouvant être obtenu par modernisation selon le procédé de l'une quelconque des revendications 1 à 8, comprenant :
∘ une enveloppe (2) ayant un compartiment intérieur, une ouverture supérieure (21) pour accéder au compartiment intérieur, une entrée de fluide (24) et une sortie de fluide (25) pour qu'un liquide s'écoule dans le compartiment intérieur, et un conduit d'aspiration (26) pour éjecter des résidus retenus,
∘ un couvercle (4) configuré pour fermer et sceller l'ouverture supérieure (21) de l'enveloppe (2),
∘ un dispositif d'aspiration (8) logé dans le compartiment intérieur, comprenant un arbre (81) relié en rotation à l'enveloppe (2),
∘ un dispositif de filtre (5) logé dans le compartiment intérieur de l'enveloppe (2) et interposé entre l'entrée de fluide (24) et la sortie de fluide (25), le dispositif de filtre (5) étant apte à être extrait de et inséré dans le compartiment intérieur à travers l'ouverture supérieure (21), le dispositif de filtre (5) comprenant :
▪ un support interne (51) et un support externe (52), chacun ayant une paroi latérale sensiblement cylindrique avec une pluralité d'ouvertures (53), le support interne (51) étant logé dans le support externe (52) et entourant le dispositif d'aspiration (8),
▪ un élément filtrant (54) interposé entre le support interne (51) et le support externe (52) et configuré pour retenir des résidus d'un liquide à filtrer qui s'écoule à travers l'élément filtrant (54), l'élément filtrant (54) étant fait d'un tissu de filtration lâche maintenu entre le support interne (51) et le support externe (52), l'élément filtrant (54) étant amovible des supports interne et externe (51, 52),
∘ un support inférieur annulaire (6) reposant dans le compartiment intérieur de l'enveloppe (2) avec un premier élément d'étanchéité (63) et un second élément d'étanchéité (64) venant en prise avec une partie inférieure du dispositif de filtre (5) et avec l'enveloppe (2), respectivement,
∘ un support supérieur (7) fixé au couvercle (4), comprenant des éléments de fixation (73) pour le couvercle (4) et un premier élément d'étanchéité (74) venant en prise avec une partie supérieure du dispositif de filtre (5), dans lequel le support supérieur (7) est amovible du dispositif de filtre (5), et le dispositif de filtre (5) est amovible du support inférieur (6), et
∘ le dispositif d'aspiration (8) comprend des moyens d'aspiration (82) en communication fluidique avec le conduit d'aspiration (26) via l'arbre (81) et configurés pour coulisser le long de la paroi latérale du support interne (51) pour aspirer des résidus retenus de l'élément filtrant (54), et pour évacuer les résidus à travers l'arbre (81) vers le conduit d'aspiration (26).
